# FASCICULE DE BREVET EUROPEEN

(11) **EP 2 710 890 B1**
(45) Date de publication et mention de la délivrance du brevet: **30.03.2016**
(21) Numéro de dépôt: 13183560.5
(22) Date de dépôt: 09.09.2013
(51) Int. Cl.: A01K 5/00, A01K 5/02, A01K 1/015

(54) **Système de distribution de fourrage, de concentré et/ou de litière à du bétail mettant en oeuvre un véhicule autoguidé**
Verteilungssystem von Trockenfutter, konzentriertem Futter und/oder Streu für Vieh, bei dem ein selbst gesteuertes Fahrzeug zum Einsatz kommt
System for dispensing fodder, concentrate and/or litter to livestock using a self-guided vehicle

(30) Priorité: 21.09.2012 FR 1258856; 08.10.2012 FR 1259536; 16.05.2013 FR 1354372
(43) Date de publication de la demande: 26.03.2014
(73) Titulaire: SARL Belair, 35133 Parigne (FR)
(72) Inventeur: Janvier, Etienne, 35133 Parigne (FR); Janvier, Pierre-Louis, 35300 Fougères (FR); Janvier, Jean-Marie, 35133 Parigne (FR)
(74) Mandataire: Ermeneux, Bertrand

(56) Documents cités:
- EP-A1- 1 754 405
- WO-A1-97/31524
- FR-A1- 2 921 227
- US-B1- 6 338 013

## Description

### 1. Domaine de l'invention

Le domaine de l'invention est celui des machines agricoles.

Plus précisément, l'invention concerne un système de distribution de fourrage, de concentré et/ou de litière à du bétail.

Dans le cadre de l'invention, on entend par le terme "litière" de la paille, de la sciure ou tout autre matière et mélange de matières connus destinés à être épandus sur le sol et à servir de couchage au bétail.

### 2. Etat de la technique

Il est largement admis que l'optimisation des couts de production de la viande ou du lait en élevage intensif suppose de contrôler en permanence la quantité et la qualité de l'alimentation distribuée au bétail et la fréquence de distribution de cette alimentation.

Ainsi par exemple, dans un parc d'engraissement de bovins en stabulation libre, il est fréquent de devoir nourrir les animaux de 2 à 4 fois par jour, afin d'optimiser leur courbe de croissance.

Afin de limiter l'astreinte qui en résulte pour l'éleveur, on a proposé des techniques permettant de distribuer automatiquement aux animaux leurs rations d'alimentation.

Une technique connue consiste à utiliser des wagons télécommandés circulant sur des rails, ou suspendu à des rails de guidage, pour transporter et distribuer des rations de fourrage à des vaches dans une étable.

Un inconvénient de cette technique est que l'installation de rails dans une étable est couteuse.

Un autre inconvénient de cette technique est qu'il faut prévoir d'engager des travaux pour déplacer les rails existants ou pour poser de nouveaux rails, lorsqu'on change la disposition des logettes d'alimentation dans l'étable, ce qui long et couteux.

Encore un inconvénient de cette technique est qu'il n'est généralement pas envisageable d'installer un rail suspendu à l'extérieur de l'étable et qu'il est donc nécessaire dans ce cas d'installer le silo d'approvisionnement dans le bâtiment de stabulation.

Par ailleurs, dans le cas où les rails de guidage sont posés au sol, il est nécessaire de veiller en permanence à ce que des souillures ou des débris ne s'accumulent pas dans le rail jusqu'à former un obstacle susceptible de provoquer l'arrêt ou le déraillement du wagon.

Afin de remédier à ces inconvénients, on a pensé à utiliser des robots à guidage automatique pour distribuer leur alimentation aux animaux.

On connait par exemple une technique de robot d'affouragement guidé par ultrasons qui repousse automatiquement du fourrage déversé dans l'allée centrale d'une étable vers les animaux.

Un inconvénient de cette technique de robot d'affouragement est que l'éleveur doit répandre régulièrement du fourrage dans l'allée centrale de l'étable, ce qui est contraignant.

On connait également une technique de robot équipé d'une trémie de mélange qui distribue automatiquement de l'ensilage au bétail. Ce robot s'approvisionne auprès d'un silo dont le contenu est déversé dans la trémie à l'aide d'un grappin automatisé.

On a également proposé des robots pour racler les déjections dans un bâtiment de stabulation.

Un inconvénient de ces techniques connues de robot est que ces robots sont dédiés à une tache spécifique et qu'il faut prévoir plusieurs robots pour réaliser différentes opérations, ce qui est très couteux.

En particulier, deux robots distincts sont nécessaires pour distribuer du concentré et du fourrage au bétail.

Un autre inconvénient de ces robots est qu'ils peuvent être renversés ou endommagés par une vache du fait de leur petite taille.

Enfin, ces robots ne sont pas adaptés pour circuler sur un sol irrégulier, par exemple à l'extérieur des bâtiments.

### 3. Objectifs de l'invention

On connait également des documents US-B1-6338013 et EP-A1-1754405 des robots autoguidés de tonte, ou de culture agricole, à propulsion électrique aptes à interchanger d'outil par eux-mêmes.

### 1. Objectifs de l'invention

L'invention a donc notamment pour objectif de pallier les inconvénients de l'état de la technique cités ci-dessus.

Plus précisément l'invention a pour objectif de fournir un système visant à assurer une distribution automatisée de fourrage frais, de concentré et/ou de litière à du bétail.

Un objectif de l'invention est également, dans au moins un mode de réalisation particulier de l'invention, de fournir un tel système de distribution de fourrage, de concentré et/ou de litière qui soit polyvalent et notamment qui puisse distribuer de l'alimentation pour bétail et/ou de la litière se présentant sous forme de balle, de botte ou en vrac et/ou qui puisse être utilisé pour un autre usage que la distribution, tel que par exemple le transport de palettes.

Un autre objectif de l'invention est de fournir une technique de distribution de fourrage, de concentré et/ou de litière qui soit simple à mettre en oeuvre, fiable et robuste.

Encore un objectif de l'invention est de fournir un tel système de distribution de fourrage, de concentré et/ou de litière qui soit d'un coût de revient réduit et qui ne nécessite pas de mettre en oeuvre des infrastructures couteuses.

L'invention a également pour objectif de fournir un système de distribution de fourrage, de concentré et/ou de litière qui ne nécessite pas d'être modifié de façon substantielle lorsqu'il est mis en oeuvre dans un nouveau bâtiment dévolu à la stabulation et/ou qui puisse se ravitaiher en fourrage, en concentré et/ou en litière à l'extérieur du bâtiment dévolu à la stabulation.

L'invention a encore pour objectif de proposer un système de distribution de fourrage, de concentré et/ou de litière apte à s'approvisionner en fourrage, en concentré ou en litière.

Ces objectifs, ainsi que d'autres qui apparaitront par la suite sont atteints à l'aide d'un système de distribution, à du bétail, de fourrage, de concentré et/ou de paille ou de sciure, destinée à former une litière pour ledit bétail, selon la revendication principale.

Ce système peut permettre de distribuer par exemple du foin, de l'ensilage, de la luzerne, des céréales aplaties, de la pulpe de betterave, des tourteaux de soja, des concentrés sous forme de granulés ou de farine destinés à compléter une ration fourragère et/ou une litière de paille.

Selon l'invention, un tel système de distribution comprend :
- au moins un outil de distribution de fourrage, de concentré et/ou de litière apte à être alimenté en énergie électrique ; et
- un véhicule électrique autoguidé présentant des moyens de solidarisation réversible avec ledit outil comprenant des moyens de connexion électrique avec ledit outil.

Ainsi, de façon inédite, l'invention propose un système polyvalent de distribution automatique d'aliments et/ou de litière au bétail.

En effet, grâce aux moyens de solidarisation réversible qui permettent de solidariser ou vice versa de désolidariser le véhicule et chaque outil, le véhicule peut lors d'une séquence préprogrammée se solidariser avec et alimenter en énergie tour-à-tour un premier outil dédié par exemple à la distribution de fourrage et un deuxième outil dédié par exemple à une distribution de paille de litière, ce qui permet de procéder successivement à la distribution d'une ration de fourrage et de paille de litière avec le même véhicule autoguidé.

Il convient de noter que dans le cadre de l'invention, la technique de guidage mise en oeuvre au sein du véhicule électrique autoguidé peut avantageusement être une technique de guidage par géo-localisation par exemple via des données GSP (acronyme de "Global Positioning System"), une technique de guidage par vision ou en d'autres termes d'optoguidage, la technique SLAM (acronyme de "simultaneous localization and mapping" en anglais), une technique de guidage par laser et/ou une technique de guidage magnétique par induction, telle que le filoguidage ou le guidage magnétique à l'aide d'aimants.

Dans le cadre de l'invention, on entend par véhicule électrique, aussi bien un véhicule à propulsion électrique, qu'un véhicule hybride à propulsion électrique et thermique, ou encore qu'un véhicule à propulsion thermique équipé d'une batterie d'accumulation prévue pour le fonctionnement de ses équipements et notamment pour alimenter en énergie électrique ledit outil.

Dans une variante, mais pas selon l'invention, il peut être envisagé que le véhicule soit un véhicule à propulsion thermique présentant des moyens d'alimentation en énergie de l'outil de distribution de fourrage, de concentré et/ou de litière par circuit hydraulique.

Préférentiellement, ledit véhicule électrique autoguidé comprend un poste de conduite et des moyens de sélection d'un mode de guidage dudit véhicule appartenant au groupe comprenant :
- mode de guidage automatique, dans lequel ledit véhicule se déplace de façon automatique ;
- mode de guidage manuel, dans lequel ledit véhicule est dirigé à partir dudit poste de conduite.

L'éleveur peut ainsi continuer à assurer la distribution du fourrage, du concentré ou de la litière, lorsque le module de guidage automatique du système présente une avarie. En basculant en mode manuel, l'éleveur peut également utiliser le véhicule pour procéder à des opérations de manutention à l'intérieur ou à l'extérieur du bâtiment de stabulation, ce qui est particulièrement avantageux.

De façon avantageuse, lesdits moyens de solidarisation réversible comprennent un élément formant support apte à recevoir ledit outil, monté mobile verticalement et/ou dans la direction d'avancement dudit véhicule et/ou dans une direction transversale à la direction d'avancement dudit véhicule.

Ainsi, il est possible de déplacer chaque outil nouvellement solidarisé au véhicule autoguidé vers le haut, sur le côté du véhicule ou vers l'avant du véhicule, de sorte à faciliter la distribution du fourrage et des concentrés dans les auges dans lesquelles le bétail vient se nourrir.

Dans au moins un mode de réalisation particulier de l'invention, ledit élément formant support comprend au moins une fourche solidaire d'un tablier.

Soulever les outils du sol devient ainsi aisé.

De préférence, ledit véhicule comprend des moyens d'identification dudit outil.

Ceci permet d'assurer une solidarisation convenable du véhicule avec chaque outil et de disposer l'outil sur le véhicule dans une position adaptée dépendant des caractéristiques géométriques de l'outil. En outre, il est ainsi possible d'ajuster le niveau de puissance électrique délivré à l'outil.

Selon un aspect avantageux de l'invention, ledit véhicule électrique autoguidé comprend des moyens de lecture d'un identifiant numérique stocké sur ledit outil destinés à être activités lorsque ledit outil est solidarisé audit véhicule.

Il peut par exemple s'agir d'un lecteur de puces électroniques de radio-identification, encore appelées puces RFID, contenant chacune un identifiant numérique propre à chaque outil.

Dans un autre mode de réalisation particulier de l'invention, il peut être prévu que ledit véhicule électrique autoguidé soit équipé d'un lecteur de codes-barres unidimensionnels ou bidimensionnels destiné à identifier un code barre spécifique fixé sur chaque outil.

Ledit outil de distribution de fourrage, de concentré et/ou de litière appartient au groupe comprenant au moins :
- mélangeuse ;
- désileuse ;
- dérouleuse de balle ;
- distributrice de litière ;
- balayeuse radiale ;
- pince à balles.

L'outil peut notamment être une désileuse-mélangeuse, une désileuse pailleuse ou une dérouleuse-pailleuse.

Dans un mode de réalisation avantageuse, ledit outil de distribution de fourrage, de concentré et/ou de litière ou ledit véhicule présente une trappe latérale et/ou un convoyeur latéral.

Il est ainsi possible au système de distribuer le fourrage, les concentrés et la litière dans des auges ou sur le sol tout en progressant.

Afin de contrôler la quantité d'aliments ou de litière distribuée, l'ouverture et la fermeture de cette trappe ou le démarrage et l'arrêt de ce convoyeur sont commandés automatiquement.

De façon préférentielle, ledit outil de distribution de fourrage, de concentré et/ou de litière comprend des moyens de chargement dudit fourrage, dudit concentré et/ou de ladite litière comprenant de préférence une fraise de désilage alimentant un convoyeur de chargement.

On obtient ainsi un système de distribution de fourrage, de concentré et/ou de litière autonome, qui charge lui-même les aliments ou la litière à distribuer. Il n'est donc pas nécessaire d'installer un grappin ou tout autre système connu d'approvisionnement du véhicule pour déposer les aliments ou la litière dans l'outil.

Dans un mode de réalisation particulier de l'invention, lesdits moyens de chargement dudit fourrage, dudit concentré et/ou de ladite litière comprennent un dispositif de pesée, de sorte à contrôler la quantité de fourrage, de concentré et/ou de litière chargée par ledit outil.

Selon un mode de réalisation particulièrement avantageux de l'invention, ledit véhicule présente sur une face extérieure des moyens de rechargement comprenant au moins un élément de connexion électrique faisant saillie vers l'extérieur dudit véhicule.

La batterie du véhicule peut ainsi se recharger simplement lors du chargement du fourrage, du concentré ou de la litière et/ou lors de ses déplacements. Il suffit pour cela au véhicule de venir en contact contre un rail d'alimentation électrique disposé sous le silo d'approvisionnement ou contre un mur du bâtiment de stabulation.

Selon un aspect particulier de l'invention, ledit véhicule repose sur 3 ou 4 roues.

Dans au moins un mode de réalisation particulier de l'invention, ledit système comprend des moyens de commande de l'ouverture ou de la fermeture d'au moins une porte, destinés à être activités lors du passage dudit véhicule au travers de ladite porte.

Il peut être envisagé que ces moyens de commande soit activés par ledit véhicule de façon passive, en plaçant par exemple un aimant ou un puce RFID sur ledit véhicule afin de signaler la présence du véhicule à proximité de la porte, ou de façon active par émission d'un signal vers lesdits moyens de commande.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- la figure 1 est une vue d'un système de distribution de fourrage et de paille selon l'invention au sein d'un enclos consacré à la stabulation à l'air libre de bovins ;
- la figure 2 est une vue du véhicule électrique autoguidé et de l'outil de distribution de fourrage du système de distribution présenté en référence à la figure 1, lorsque ce véhicule et cet outil sont solidarisés ;
- la figure 3 est une vue schématique en coupe de l'outil de distribution de fourrage du système de distribution présenté sur les figures 1 et 2 ;
- la figure 4 est une vue en coupe de l'outil de distribution de litière du système de distribution présenté en référence à la figure 1 ;
- la figure 5 illustre un autre exemple de mode de réalisation d'un système de distribution selon l'invention ;
- la figure 6 est une vue en coupe d'un exemple d'outil de type balayeuse d'un système de distribution selon l'invention ;
- les figures 7A et 7B sont des vues respectivement en coupe et de dessus d'un outil de type pince balles d'un exemple de système de distribution selon l'invention.

### 6. Description détaillée de l'invention

### 6.1. Exemple de mode de réalisation de l'invention

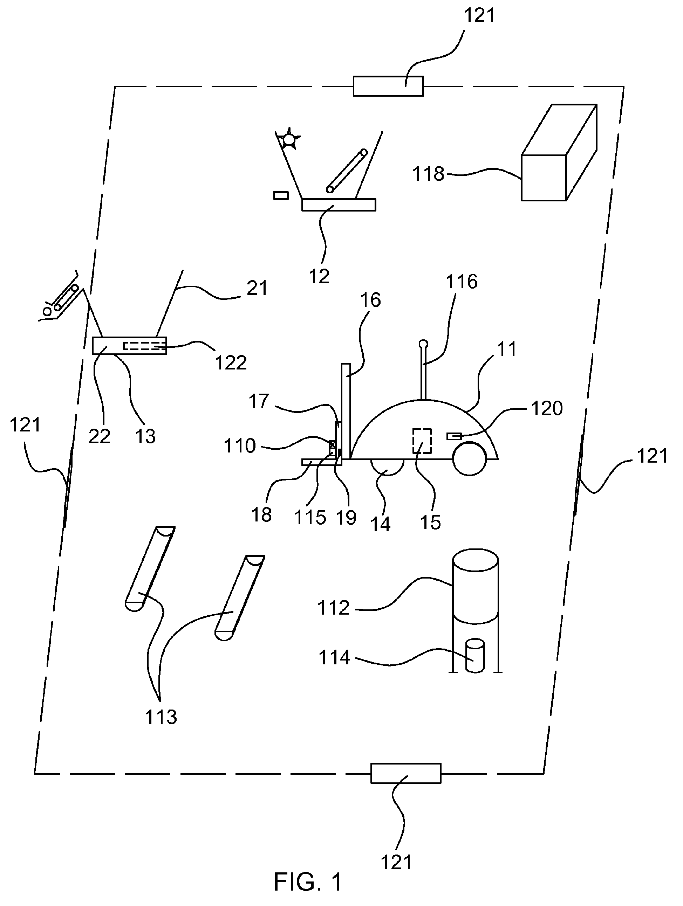

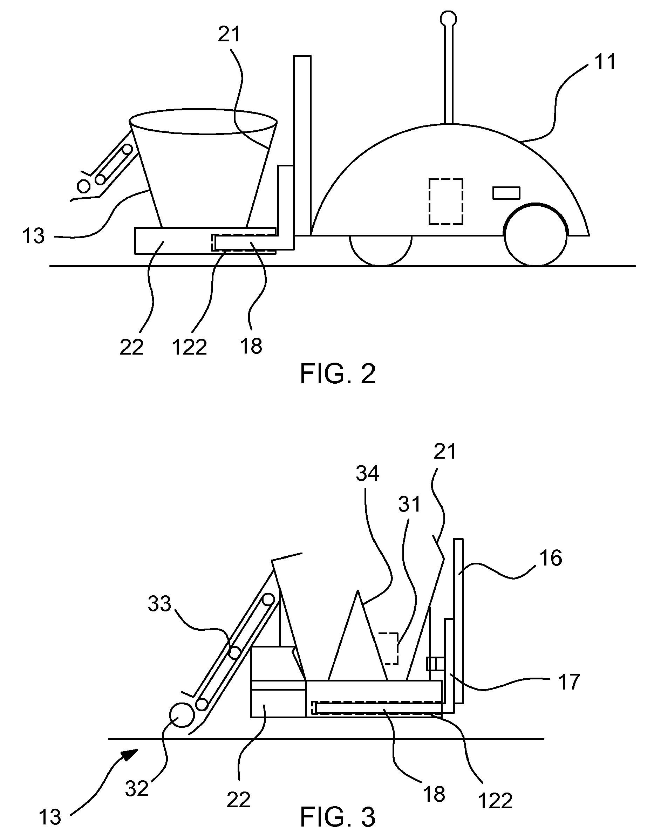

On a illustré schématiquement en référence aux figures 1 et 2 un exemple de mode de réalisation d'un système 10 de distribution de fourrage et de litière selon l'invention destiné à être mis en oeuvre dans un enclos extérieur dévolu à la stabulation à l'air libre des bovins.

Ce système 10 est composé d'un véhicule électrique autoguidé 11, d'un outil de distribution de paille de litière 12 et d'un outil de distribution de fourrage 13.

Sur la figure 1, le véhicule électrique autoguidé 11 est désolidarisé des outils 12 et 13, qui reposent sur des emplacements de stockage prévus à cet effet.

Ce véhicule électrique autoguidé 11 se présente sous la forme d'un véhicule à trois roues 14 entrainées par des servomoteurs électriques (non représentés sur la figure 1) alimentés en énergie par une batterie embarquée 15. Il est équipé dans sa partie avant d'un mat vertical télescopique 16 le long duquel peut coulisser un tablier porte-outil 17 se prolongeant par deux fourches de solidarisation 18.

Un mécanisme d'actionnement hydraulique 19 solidaire du mat 16 est en outre prévu pour permettre au tablier portant les fourches 18 de se décaler sur un côté ou l'autre du véhicule. Il permet de déporter l'outil 13 sur le côté droit ou gauche lorsque celui-ci est solidarisé au véhicule 11, afin de faciliter la distribution du fourrage dans les auges 113.

Ce véhicule autoguidé 11 est configuré dans ce mode de réalisation de l'invention pour évoluer uniquement en mode de guidage automatique. Il comprend à cet effet un récepteur GPS et un module de guidage par géo-localisation connu en soi interprétant les données reçues par le récepteur GPS, qui contrôle la trajectoire du véhicule 11 (non représentés sur la figure 1).

Un connecteur d'alimentation électrique mâle 110 reliée à la batterie 15 est fixé au tablier 17. Cette prise 110 est destinée à alimenter en électricité l'outil 12 ou l'outil 13 lorsque ce dernier est solidarisé au véhicule 11.

Le véhicule 11 est également équipé d'un connecteur saillant pour recharge électrique 120 qui permet au véhicule de recharger la batterie 15 au contact de rails d'alimentation électriques 121 disposés sur les bords de l'enclos.

Lorsque l'heure de distribution du fourrage aux animaux approche, le véhicule autoguidé 11, commandé par le module de guidage automatique, se dirige vers l'outil de distribution de fourrage 12 et se solidarise avec ce dernier. Il est représenté solidarisé avec l'outil 13 sur la figure 2.

La solidarisation de l'outil 13 au véhicule 11 s'opère en glissant les fourches 18 dans deux logements 122 formés sur les bords inférieurs de l'outil 13 au sein de la plateforme 22 portant la cuve 21. Le véhicule 11 se rapproche alors lentement de la cuve 21 de l'outil, jusqu'à ce que la plateforme 22 vienne en butée contre le tablier 17.

La mise en butée de la plateforme 22 contre le tablier 17 compresse un ressort de rappel monté sur le tablier qui libère un crochet destiné à verrouiller l'outil 13 avec le véhicule 11. Elle permet également d'enficher le connecteur mâle 110 dans un connecteur électrique femelle prévu sur l'outil 13, ce qui permet d'assurer son alimentation en électricité.

Lors de la connexion de l'outil 13 avec le véhicule 11, un lecteur de puce RFID 115 procède à la lecture d'un identifiant numérique de l'outil 13 stocké dans une puce RFID collée sur la face extérieure de la cuve tournée vers le véhicule, afin de vérifier que l'outil connecté au véhicule 11 est bien l'outil 13. Cette opération de vérification effectuée, un contacteur s'ouvre de façon automatique au sein du véhicule et la puissance électrique nécessaire à son fonctionnement est délivrée à l'outil 13.

L'outil 13 est ensuite soulevé par le véhicule 11, par coulissement du tablier 17 le long du mat 16, et le véhicule 11 se dirige vers le silo d'approvisionnement en fourrage 112.

Lorsque le véhicule 11 s'arrête devant le silo, un connecteur électrique prévu sur un deuxième mat 116 dressé au dessus du capot du véhicule 11 s'enfiche dans un connecteur électrique d'alimentation correspondant prévu sur le silo. Le silo 112 est alors alimenté en électricité par le véhicule 11, ce qui actionne une trappe de retenue et permet à une quantité prédéterminée d'ensilage frais de se déverser dans un bac 114 placé sous le silo.

Comme on peut le voir sur la figure 3, qui est une vue schématique en coupe de l'outil 13, l'ensilage contenu dans le bac peut alors être chargé dans la cuve 21 de l'outil 13 sous l'action d'une fraise de désilage 32 alimentant un convoyeur de chargement 33, dans laquelle il est mélangé grâce à une vis de mélange 34.

Une fois le chargement de la cuve achevé, le véhicule 11 se dirige vers les auges 113 afin de procéder à la distribution des rations de fourrage aux animaux au travers d'une trappe latérale 31 prévue sur la cuve de l'outil 13 qui s'ouvre lorsque le véhicule 11 stationne devant les auges 113.

Après avoir distribué le fourrage au bétail, le véhicule se dirige vers l'emplacement de stockage de l'outil 13, où il dépose l'outil 13 puis se désolidarise de l'outil 13.

Après avoir marqué un temps d'arrêt préprogrammé, le véhicule 11 se dirige vers l'outil 12 avec lequel il se solidarise pour pouvoir procéder à la distribution aux animaux d'une quantité prédéterminée de litière stockée dans une cellule de stockage spécifique 118.

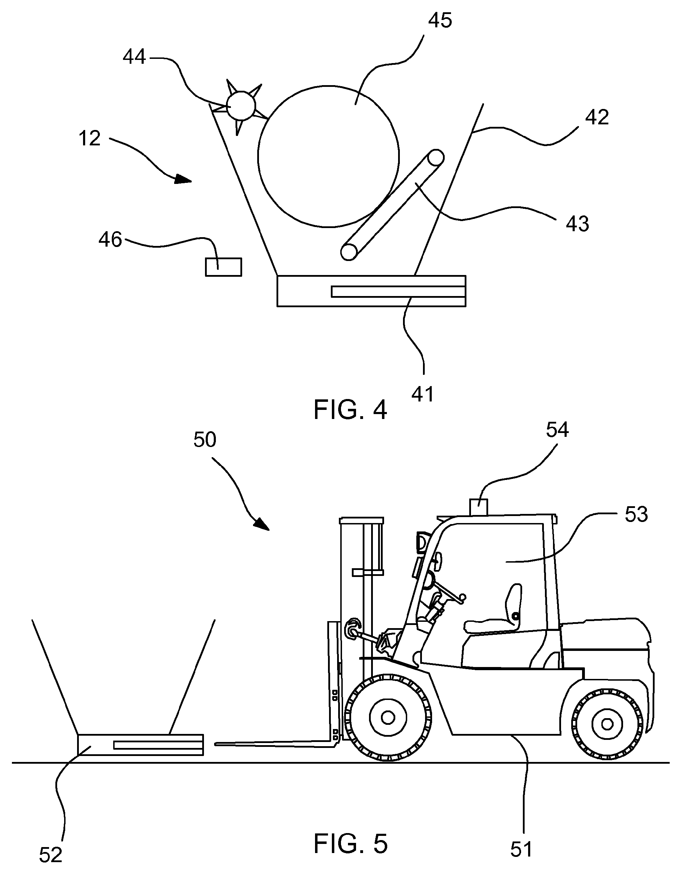

Dans ce mode de réalisation de l'invention, l'outil 12 est une dérouleuse de balle représentée en coupe sur la figure 4.

Comme on peut le voir sur la figure 4, l'outil 12 comprend des logements 41 pour sa solidarisation avec le véhicule 11 et une cuve 42 contenant un tapis inclinable 43, destiné à recevoir une balle de paille 45, et une fraise rotative 44 permettant de détacher des brins de paille de la balle 45. L'outil 12 est également équipé de disques rotatifs 46 afin d'assurer la distribution du paillage dans les logettes.

L'Homme du métier déduira sans effort excessif de la description précédente comment s'opère cette distribution de fourrage.

### 6.2. Autre exemple de mode de réalisation de l'invention

On a illustré sur la figure 5 un autre exemple de système de distribution de concentré selon l'invention destiné à distribuer du concentré à des vaches à l'intérieur d'une étable.

Ce système de distribution de concentré 50 comprend un chariot électrique autoguidé 51 à quatre roues prévu pour fonctionner en mode semi-automatique et un outil de distribution de concentré 52 représentés désolidarisés sur la figure 5.

Comme on peut le voir sur la figure 5, le chariot électrique autoguidé 51 présente un poste de conduite 53.

Ce véhicule 51 est prévu pour pouvoir fonctionner en mode de guidage automatique et en mode de guidage manuel. Un inverseur permet de basculer du mode de guidage automatique au mode de guidage manuel et inversement.

Le guidage automatique du véhicule 51 est assuré par un module de guidage automatique par vision associé à une caméra 54.

En basculant en mode manuel, l'éleveur peut conduire lui-même le véhicule 51 pour distribuer du concentré au bétail. Cette option se révèle particulièrement utile en cas de défaillance du module de guidage automatique par vision, ou en attendant un technicien de maintenance ou bien pour assurer au cas par cas une distribution de concentré à des animaux parqués dans une autre étable où le guidage automatique n'est pas opérant.

Il convient de noter que dans ce mode de réalisation particulier de l'invention, lorsque l'outil 52 est solidarisé au véhicule en mode manuel, son identifiant numérique est lu par un lecteur prévu à cet effet sur le véhicule, et s'affiche sous forme de pictogramme sur le pupitre de commande du véhicule.

### 6.3. Autres caractéristiques et avantages de l'invention

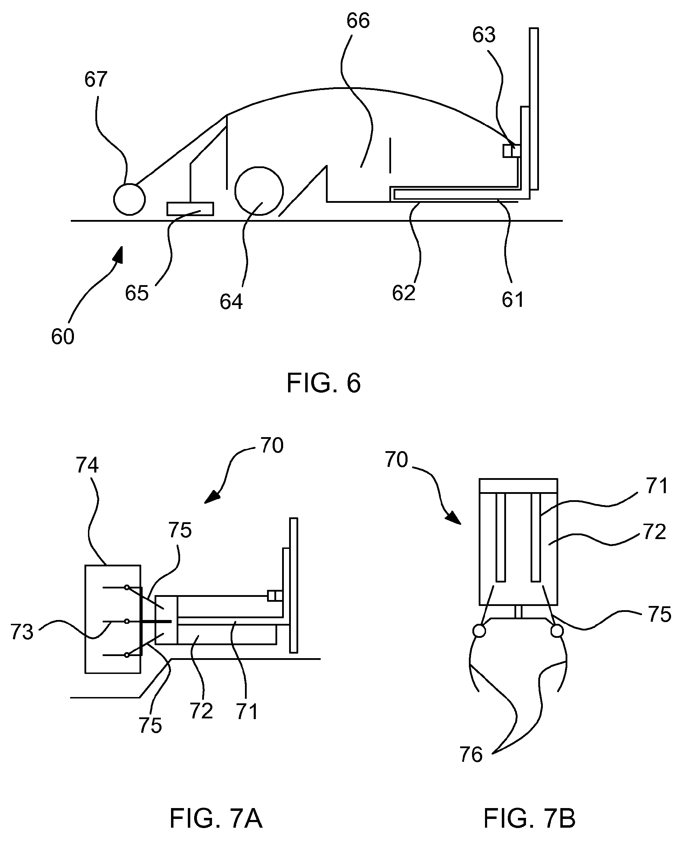

Dans des variantes des modes de réalisation de l'invention détaillés ci-dessus, il est également prévu de solidariser au véhicule électrique autoguidé :
- un outil de type mélangeuse ;
- un outil de type distributrice de litière ;
- un outil de type balayeuse radiale tel que celui illustré sur la figure 6 ; et/ou
- un outil de type pince à balles, tel que celui illustré sur les figures 7A et 7B.

Comme on peut le voir en détail sur la figure 6, qui est une vue en coupe d'un outil de type balayeuse radiale 60 solidarisé aux fourches 61 d'un véhicule autoguidé tel que ceux présentés dans les exemples précédents, l'outil 60 comprend des logements 62 de solidarisation avec le véhicule, un connecteur électrique d'alimentation en électricité 63, un balai rotatif transversal 64, des balais latéraux 65, une cuve de stockage des déchets 66 et une roue de mise à hauteur 67.

L'exemple d'outil de type pince à balle 70 représenté respectivement en coupe latérale et dans une vue de dessus sur les figures 7A et 7B comprend deux logements 71 formés dans un support 72, destinés à recevoir chacune une fourche du véhicule, une fourche 73 destinée à s'enfoncer dans la balle 74 et deux vérins hydrauliques 75 fixés sur ce support 72 qui actionnent des pinces latérales 76.

Il peut par ailleurs être envisagé sans sortir du cadre de l'invention que le système de distribution de fourrage, de concentré et/ou de litière comprenne 3, 4, 5, ... outils de distribution.

## Revendications

1. Système (10;50) de distribution, à du bétail, de fourrage, de concentré et/ou de paille ou de sciure, destinée à former une litière pour ledit bétail, **caractérisé en ce qu'**il comprend :
- au moins un outil de distribution de fourrage, de concentré et/ou de paille ou de sciure (12,13;60;70) appartenant au groupe comprenant au moins :
- mélangeuse ;
- désileuse ;
- dérouleuse de balle (12) ;
- distributrice de litière ;
- balayeuse radiale (60) ;
- pince à balles (70),
apte à être alimenté en énergie électrique ; et
- un véhicule électrique autoguidé (11;51) présentant des moyens de solidarisation réversible avec ledit outil (12,13;60;70) comprenant des moyens de connexion électrique avec ledit outil (12,13;60;70).

2. Système de distribution de fourrage, de concentré et/ou de paille ou de sciure selon la revendication 1, **caractérisé en ce que** ledit véhicule électrique autoguidé (11;51) appartient au groupe comprenant :
- véhicule à propulsion électrique ;
- véhicule hybride à propulsion électrique et thermique ;
- véhicule à propulsion thermique comprenant une batterie d'accumulation destinée à alimenter en énergie électrique ledit outil.

3. Système de distribution de fourrage, de concentré et/ou de paille ou de sciure selon l'une quelconque des revendications 1 et 2, **caractérisé en ce que** ledit véhicule électrique autoguidé (11;51) comprend un poste de conduite (53) et des moyens de sélection d'un mode de guidage dudit véhicule appartenant au groupe comprenant :
- mode de guidage automatique, dans lequel ledit véhicule (11;51) se déplace de façon automatique ;
- mode de guidage manuel, dans lequel ledit véhicule (11;51) est dirigé à partir dudit poste de conduite (53).

4. Système de distribution de fourrage, de concentré et/ou de paille ou de sciure selon l'une quelconque des revendications 1 à 3, **caractérisé en ce que** lesdits moyens de solidarisation réversible comprennent un élément formant support apte à recevoir ledit outil (12,13;60;70), monté mobile verticalement et/ou dans la direction d'avancement dudit véhicule (11;51) et/ou dans une direction transversale à la direction d'avancement dudit véhicule (11;51).

5. Système de distribution de fourrage, de concentré et/ou de paille ou de sciure selon la revendication 4, **caractérisé en ce que** ledit élément formant support comprend au moins une fourche (18) solidaire d'un tablier (17).

6. Système de distribution de fourrage, de concentré et/ou de paille ou de sciure selon l'une quelconque des revendications 4 ou 5, **caractérisé en ce que** ledit élément formant support est monté coulissant le long d'un mat (16) ou est solidarisé à un bras télescopique.

7. Système de distribution de fourrage, de concentré et/ou de paille ou de sciure selon l'une quelconque des revendications 1 à 6, **caractérisé en ce que** ledit véhicule (11;51) comprend des moyens d'identification dudit outil.

8. Système de distribution de fourrage, de concentré et/ou de paille ou de sciure selon la revendication 7, **caractérisé en ce que** ledit véhicule électrique autoguidé (11;51) comprend des moyens de lecture d'un identifiant numérique stocké sur ledit outil destinés à être activités lorsque ledit outil (12,13;60;70) est solidarisé audit véhicule.

9. Système de distribution de fourrage, de concentré et/ou de paille ou de sciure selon l'une quelconque des revendications 1 à 8, **caractérisé en ce que** ledit outil de distribution de fourrage, de concentré et/ou de paille ou de sciure (12,13;60;70) ou ledit véhicule (11;51) présente une trappe latérale (31) et/ou un convoyeur latéral.

10. Système de distribution de fourrage, de concentré et/ou de paille ou de sciure selon l'une quelconque des revendications 1 à 9, **caractérisé en ce que** ledit outil de distribution de fourrage, de concentré et/ou de paille ou de sciure (12,13;60;70) comprend des moyens de chargement dudit fourrage, dudit concentré et/ou de ladite paille ou de ladite sciure comprenant de préférence une fraise de désilage (32) alimentant un convoyeur de chargement (33).

11. Système de distribution de fourrage, de concentré et/ou de paille ou de sciure selon l'une quelconque des revendications 1 à 10, **caractérisé en ce que** ledit véhicule (11;51) présente sur une face extérieure des moyens de rechargement comprenant au moins un élément de connexion électrique (120) faisant saillie vers l'extérieur dudit véhicule.

12. Système de distribution de fourrage, de concentré et/ou de paille ou de sciure selon l'une quelconque des revendications 1 à 11, **caractérisé en ce que** ledit véhicule (11;51) repose sur 3 ou 4 roues.

13. Système de distribution de fourrage, de concentré et/ou de paille ou de sciure selon l'une quelconque des revendications 1 à 12, **caractérisé en ce que** ledit véhicule (11;51) comprend des moyens d'alimentation en énergie dudit outil (12,13;60;70) par circuit hydraulique.

## Patentansprüche

1. System (10; 50) zum Verteilen von Trockenfutter, Konzentrat und/oder Stroh oder Sägemehl an Vieh, um eine Streuschütte für das Vieh auszubilden, **dadurch gekennzeichnet, dass** es umfasst:
- Mindestens ein Verteilwerkzeug für Trockenfutter, Konzentrat und/oder Stroh oder Sägemehl (12, 13; 60, 70), das zu der Gruppe gehört, die umfasst:
- Mischer;
- Siloentleerer;
- Ballenentroller (12);
- Streuverteiler;
- Radialkehrer (60);
- Ballenklemme (70),
die geeignet sind, mit elektrischer Energie versorgt zu werden; und
- ein selbststeuerndes elektrisches Fahrzeug (11; 51) das Mittel zum lösbaren Verbinden mit dem Werkzeug (12, 13; 60; 70) aufweist, die Mittel zum elektrischen Verbinden mit dem Werkzeug (12, 13; 60; 70) umfassen.

2. System zum Verteilen von Trockenfutter, Konzentrat und/oder Stroh oder Sägemehl gemäß Anspruch 1, **dadurch gekennzeichnet, dass** das selbststeuernde elektrische Fahrzeug (11; 51) zu der Gruppe gehört, die umfasst:
- Fahrzeuge mit elektrischem Antrieb;
- Hybridfahrzeuge mit elektrischem und thermischem Antrieb;
- Fahrzeuge mit thermischem Antrieb, die eine Batterie umfassen, die dazu bestimmt ist, das Werkzeug mit elektrischer Energie zu versorgen.

3. System zum Verteilen von Trockenfutter, Konzentrat und/oder Stroh oder Sägemehl gemäß einem der Ansprüche 1 und 2, **dadurch gekennzeichnet, dass** das selbststeuernde elektrische Fahrzeug (11; 51) einen Steuerposten (53) und Mittel zum Auswählen eines Steuerungsmodus des Fahrzeuges umfasst, die zu der Gruppe gehören, die umfasst:
- Automatischer Steuerungsmodus, in dem das Fahrzeug (11; 51) automatisch fährt;
- Manueller Steuerungsmodus, in dem das Fahrzeug (11; 51) von dem Steuerposten (53) aus gesteuert wird.

4. System zum Verteilen von Trockenfutter, Konzentrat und/oder Stroh oder Sägemehl gemäß einem der Ansprüche 1 bis 3, **dadurch gekennzeichnet, dass** die Mittel zum lösbaren Verbinden ein Stützelement umfassen, das als Aufnahme zum Aufnehmen des Werkzeuges (12, 13; 60; 70) ausgebildet ist, das vertikal bewegbar montiert ist und/oder in Fahrtrichtung des Fahrzeuges (11; 51) und/oder Richtung quer zur Fahrtrichtung des Fahrzeuges (11; 51).

5. System zum Verteilen von Trockenfutter, Konzentrat und/oder Stroh oder Sägemehl gemäß Anspruch 4, **dadurch gekennzeichnet, dass** das Stützelement mindestens eine Gabel (18) aufweist, die mit einer Schürze (17) verbunden ist.

6. System zum Verteilen von Trockenfutter, Konzentrat und/oder Stroh oder Sägemehl, gemäß einem der Ansprüche 4 und 5, **dadurch gekennzeichnet, dass** das Stützelement entlang eines Mastes (16) gleitend montiert ist oder mit einem Teleskoparm verbunden ist.

7. System zum Verteilen von Trockenfutter, Konzentrat und/oder Stroh oder Sägemehl gemäß einem der Ansprüche 1 bis 6, **dadurch gekennzeichnet, dass** das Fahrzeug (11; 51) Mittel zum Identifizieren des Werkzeuges umfasst.

8. System zum Verteilen von Trockenfutter, Konzentrat und/oder Stroh oder Sägemehl gemäß Anspruch 7, **dadurch gekennzeichnet, dass** das selbststeuernde elektrische Fahrzeug (11; 51) Mittel zum Lesen einer numerischen Identifikation umfasst, welche auf dem Werkzeug gespeichert ist und dazu bestimmt ist, aktiviert zu werden, wenn das Werkzeug (12, 13; 60; 70) mit dem Fahrzeug verbunden ist.

9. System zum Verteilen von Trockenfutter, Konzentrat und/oder Stroh oder Sägemehl gemäß einem der Ansprüche 1 bis 8, **dadurch gekennzeichnet, dass** das Werkzeug zum Trockenfutter, Konzentrat und/oder Stroh oder Sägemehl (12, 13; 60; 70) oder das Fahrzeug (11; 51) eine seitliche Fallgrube (31) und/oder eine seitliche Fördervorrichtung umfasst.

10. System zum Verteilen von Trockenfutter, Konzentrat und/oder Stroh oder Sägemehl gemäß einem der Ansprüche 1 bis 9, **dadurch gekennzeichnet, dass** das Werkzeug zum Trockenfutter, Konzentrat und/oder Stroh oder Sägemehl (12, 13; 60; 70) Mittel zum Laden des Trockenfutters, Konzentrats und/oder Strohs oder Sägemehls umfasst, die vorzugsweise eine Siloentleerungsschnecke (32) umfassen, welche eine Ladefördervorrichtung (33) versorgt.

11. System zum Verteilen von Trockenfutter, Konzentrat und/oder Stroh oder Sägemehl gemäß einem der Ansprüche 1 bis 10, **dadurch gekennzeichnet, dass** das Fahrzeug (11; 51) an einer Außenseite Mittel zum Wiederbeladen aufweist, die wenigstens ein Mittel (120) zum elektrischen Verbinden umfassen, welches nach außen aus dem Fahrzeug herausragt.

12. System zum Verteilen von Trockenfutter, Konzentrat und/oder Stroh oder Sägemehl gemäß einem der Ansprüche 1 bis 11, **dadurch gekennzeichnet, dass** das Fahrzeug (11; 51) auf drei oder vier Rädern steht.

13. System zum Verteilen von Trockenfutter, Konzentrat und/oder Stroh oder Sägemehl gemäß einem der Ansprüche 1 bis 12, **dadurch gekennzeichnet, dass** das Fahrzeug (11; 51) Mittel zum Versorgen des Werkzeuges (12, 13; 60; 70) mit Energie über einen Hydraulikkreis umfasst.

## Claims

1. A system (10; 50) for dispensing, to livestock, fodder, concentrate and/or straw or sawdust, intended to form a litter for said livestock, **characterized in that** it comprises:
- at least one tool (12, 13; 60; 70) for dispensing fodder, concentrate and/or straw or sawdust, belonging to the group comprising at least:
- mixer;
- silo unloader;
- bale unroller (12);
- litter distributor;
- radial sweeper (60);
- bale clamp (70),
able to be supplied with electrical energy; and
- a self-guided electric vehicle (11; 51) having reversible attachment means with said tool (12, 13; 60; 70) comprising means for electrical connection with said tool (12, 13; 60; 70).

2. The system for dispensing fodder, concentrate and/or straw or sawdust according to claim 1, **characterized in that** said self-guided electric vehicle (11; 51) belongs to the group comprising:
- vehicle with electric propulsion;
- hybrid vehicle with electric and heat propulsion;
- vehicle with heat propulsion including a storage battery intended to supply said tool with electrical energy.

3. The system for dispensing fodder, concentrate and/or straw or sawdust according to any one of claims 1 and 2, **characterized in that** said self-guided electric vehicle (11; 51) comprises a driving station (53) and means for selection of a guiding mode of said vehicle belonging to the group comprising:
- automatic guiding mode, in which said vehicle (11; 51) moves in an automatic manner;
- manual guiding mode, in which said vehicle (11; 51) is directed from said driving station (53).

4. The system for dispensing fodder, concentrate and/or straw or sawdust according to any one of claims 1 to 3, **characterized in that** said reversible attachment means comprise an element forming a support able to receive said tool (12, 13; 60; 70), mounted so as to be movable vertically and/or in the advancing direction of said vehicle (11; 51) and/or in a transverse direction to the advancing direction of said vehicle (11; 51).

5. The system for dispensing fodder, concentrate and/or straw or sawdust according to claim 4, **characterized in that** said element forming a support comprises at least one fork (18) integral with a panel (17).

6. The system for dispensing fodder, concentrate and/or straw or sawdust according to any one of claims 4 or 5, **characterized in that** said element forming a support is slidably mounted along a boom (16) or is secured to a telescopic arm.

7. The system for dispensing fodder, concentrate and/or straw or sawdust according to any one of claims 1 to 6, **characterized in that** said vehicle (11; 51) comprises identification means of said tool.

8. The system for dispensing fodder, concentrate and/or straw or sawdust according to claim 7, **characterized in that** said self-guided electric vehicle (11; 51) comprises means for reading a digital identifier stored on said tool, said means being intended to be activated when said tool (12, 13; 60; 70) is secured to said vehicle.

9. The system for dispensing fodder, concentrate and/or straw or sawdust according to any one of claims 1 to 8, **characterized in that** said tool for dispensing fodder, concentrate and/or straw or sawdust (12, 13; 60, 70) or said vehicle (11; 51) has a lateral flap (31) and/or a lateral conveyor.

10. The system for dispensing fodder, concentrate and/or straw or sawdust according to any one of claims 1 to 9, **characterized in that** said tool for dispensing fodder, concentrate and/or straw or sawdust (12, 13; 60; 70) comprises means for loading said fodder, said concentrate and/or said straw or said sawdust comprising preferably a silage cutter (32) supplying a loading conveyor (33).

11. The system for dispensing fodder, concentrate and/or straw or sawdust according to any one of claims 1 to 10, **characterized in that** said vehicle (11; 51) has, on an exterior face, reloading means comprising at least one electrical connection element (120) projecting towards the exterior of said vehicle.

12. The system for dispensing fodder, concentrate and/or straw or sawdust according to any one of claims 1 to 11, **characterized in that** said vehicle (11; 51) rests on 3 or 4 wheels.

13. The system for dispensing fodder, concentrate and/or straw or sawdust according to any one of claims 1 to 12, **characterized in that** said vehicle (11; 51) comprises means for supplying said tool (12, 13; 60; 70) with energy by a hydraulic circuit.
